# EUROPEAN PATENT APPLICATION

(11) **EP 1 408 442 A2**
(43) Date of publication of application: **14.04.2004**
(21) Application number: 03256359.5
(22) Date of filing: 09.10.2003
(51) Int. Cl.: G06K 9/20, H01L 27/02

(54) **Fingerprint detector with improved sensing surface layer**

(30) Priority: 11.10.2002 US 269346
(71) Applicant: STMicroelectronics, Inc., Carrollton Texas 75006-5039 (US)
(72) Inventor: Fang, Ming, Plano Texas 75024 (US); Wang, Fuchao, Plano Texas 75025 (US); Thomas, Danielle A., 38330 Montbonnot-Saint-Martin (FR)
(74) Representative: Style, Kelda Camilla Karen

(57) **Abstract**

A fingerprint detector having a smooth sensing surface for contact with a fingerprint includes capacitive sensor plates defining an array of sensor cells below the sensing surface and tungsten ESD protection grid lines surrounding each sensor cell. The sensing surface is defined by an alumina layer with the tungsten grid lines embedded therein. The alumina layer provides a sensing surface with improved scratch resistance. The resulting detector is more sensitive in its capacitive sensing due to the relatively high dielectric constant of the alumina layer.

## Description

The present invention relates generally to semiconductor fingerprint detectors, and more particularly to improvements in the structure of a fingerprint detection surface layer used on a fingerprint detector device.

A capacitive distance sensor is disclosed in commonly-assigned U.S. Patent No. 6,114,862, the disclosure of which is hereby incorporated by reference. The capacitive distance sensor disclosed in this patent is particularly useful in semiconductor fingerprint detectors. The present invention provides an improvement in the structure of the outer surface layer to which the fingerprint of the user makes contact. Figures 1 and 2 herein correspond to Figures 1 and 4 of U.S. Patent No. 6,114,862, and are briefly described below to facilitate an understanding of the present invention.
FIG. 1 is a block diagram of a prior art sensor device for which the present invention provides an improvement;
FIG. 2 is an enlarged schematic side view of a small portion of a finger positioned above two adjacent sensor cells of the device of FIG. 1;
FIGS. 3-7 are schematic cross sections illustrating a sequence of conventional process steps for making the sensor device of FIG. 1;
FIG. 8 is an enlarged view of a portion of FIG. 7 showing additional structural details;
FIG. 9 is a schematic plan view of the layout of the capacitor plates of one sensor cell (overlying insulating layers not shown);
FIG. 10 is an enlarged plan view of a portion of a tungsten lattice used in the device of FIG. 1; and
FIG. 11 is a schematic cross section similar to FIG. 7 showing the sensor device with the improved sensing surface layer according to the present invention.

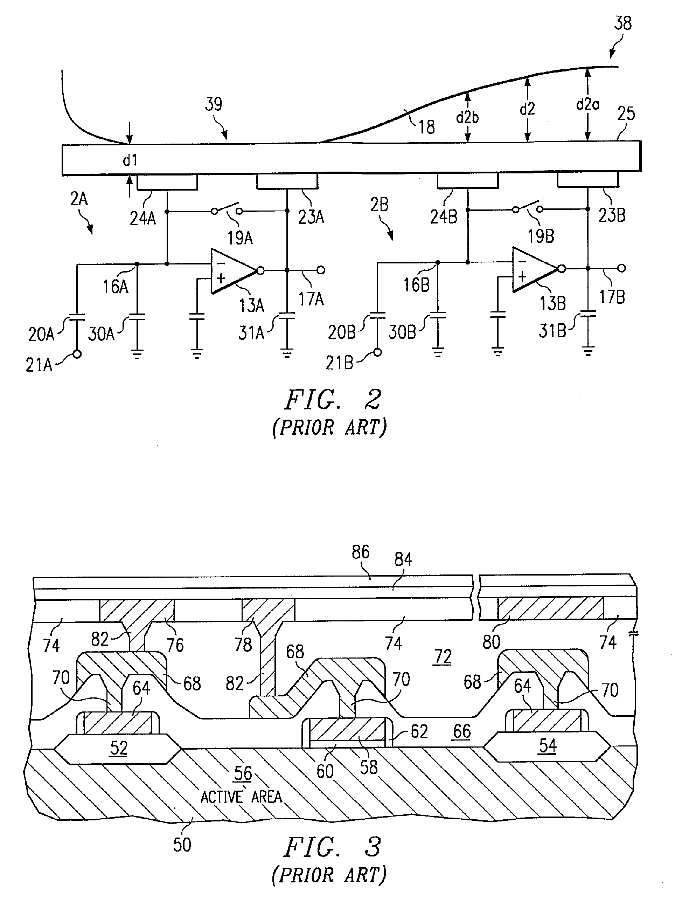

In the cross-sectional views of FIGS. 3-8 and 11, conductive portions are cross-hatched and non-conductive portions are left without cross-hatching for clarity of illustration.

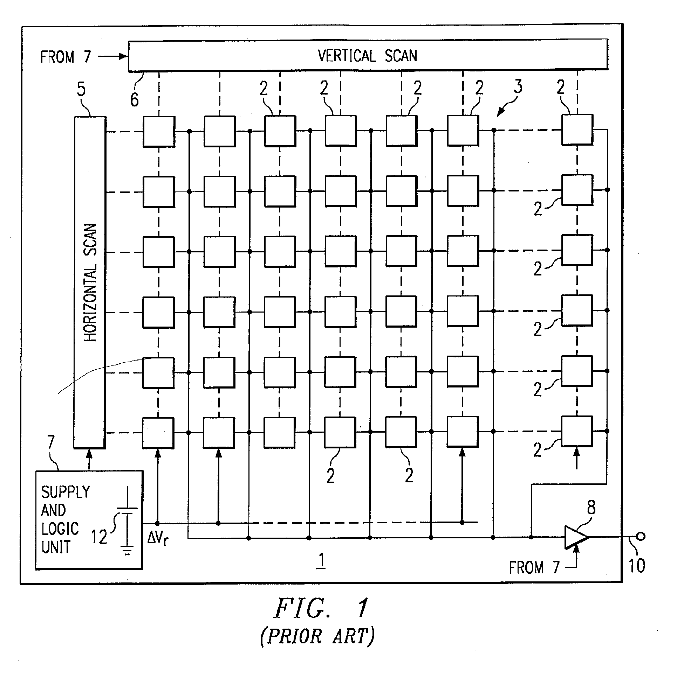

FIG. 1 shows a sensor device 1 for sensing a distance between the sensor device and an object, such as a finger. The sensor device 1 includes a number of cells 2 arranged to form an array 3 and each constituting an elementary sensor. The simplicity of the individual cells 2 enables the sensor device 1 to be implemented in integrated form on a single semiconductor chip.

The sensor device 1 also comprises a horizontal scanning stage 5 and a vertical scanning stage 6 for enabling one of the cells 2 at a time according to a predetermined scanning pattern. The stages 5 and 6 enable the outputs of the cells to be read using shift registers, address decoders, or other suitable circuitry.

The sensor device 1 also comprises a supply and logic unit 7, which supplies the circuit elements of the device with power (including the cells 2), feeds the necessary reference voltages, and controls the timing of device operations. FIG. 1 shows that the supply and logic unit 7 includes a voltage source 12. A buffer 8 is interconnected with the outputs of all the cells 2, and includes an output 10 for sequentially generating signals corresponding to the outputs of the cells 2 according to the sequence in which they are enabled by scanning the stages 5, 6.

FIG. 2 shows the details of two adjacent cells 2A and 2B with a skin surface portion 18 of a human finger positioned thereover. The elements of each of these two cells bear the designators A or B but are essentially identical, as will now be described. Each cell 2 preferably comprises a low-power inverting amplifier 13 having an input 16 and an output 17, which also defines the output of individual cell 2. Each cell 2 also preferably includes first and second coplanar capacitor plates 23 and 24, positioned facing the skin surface 18 of the finger being printed. The plates 23, 24 are covered with a dielectric layer 25 that covers the face of the integrated sensor device 1, including the entire array 3 of cells 2. A reset switch 19 is connected between the input 16 and output 17 of the inverting amplifier 13. An input capacitor 20 is connected between an input 21 of the cell 2 and the input 16 of the inverting amplifier 13. The input 16 of the inverting amplifier 13 also has an equivalent input capacitance depicted by capacitor 30. Likewise, the output 17 has an equivalent output capacitance depicted by capacitor 31.

The skin surface 18 includes a ridge 39 adjacent to the first cell 2A and a valley 38 adjacent to the second cell 2B. As a result, the first and second cells 2A, 2B will each produce different capacitive coupling responses in the sensor device 1. Accordingly, the first cell 2A will sense a smaller distance d1, signifying the ridge 39, than the second cell 2B, which senses a larger distance d2, signifying the valley 38. The distance d2 sensed by the second cell 2B will be the average of a distance d2a between the first capacitor plate 23B and the portion of the skin surface 18 directly above the first capacitor plate 23B and a distance d2b between the second capacitor plate 24B and the portion of the skin surface 18 directly above the second capacitor plate 24B. From a lumped-model point of view, this structure realizes a three-capacitor scheme that can sense the difference between a contacting member, a ridge, and a non-contacting member, a valley.

It will be appreciated that the durability of the top surface of the dielectric layer 25 is an important concern. The prior art device just described was provided with a thin silicon carbide layer on the upper surface. The final steps in the sequence of processing steps are illustrated in FIGS. 3-8, and will now be described briefly to highlight the improvement made by the present invention hereinafter disclosed.

FIG. 3 schematically illustrates one capacitive sensor cell and other common structures within the device. The device is fabricated on a conventional monocrystalline silicon substrate 50, the upper layer of which may be epitaxially formed. Relatively thick field oxide layers 52 and 54 define an active area 56 therebetween. The active area 56 is typical of many such active areas repeated throughout the device, which may include N-type or P-type regions (not shown) of conventional transistor elements.

The gate structure of a typical transistor is shown immediately above the active area 56, and includes a polysilicon gate 58, a thin gate oxide layer 60, and sidewall oxide spacers 62. Polysilicon interconnects 64, which are shown atop the field oxide layers 52 and 54, are used to interconnect other transistor elements (not shown) of the device.

Overlying the polysilicon gate 58 and polysilicon interconnects 64 is a relatively thick dielectric layer 66, which is preferably a doped oxide such as borophosphosilicate glass (BPSG). A first metalization layer defines metal interconnects 68 and contacts 70 extending down through the BPSG layer 66 to contact the polysilicon gate 58 and polysilicon interconnects 64. Preferably, the metal used to define the interconnects 68 and contacts 70 is primarily aluminum with traces of silicon (about 1.0%) and copper (about 0.5%). A very thin composite layer (not shown) of titanium and titanium nitride is interposed at each interface between each contact 70 and the polysilicon material therebelow.

A planarized dielectric layer 72 covers the metal interconnects 68 and BPSG layer 66. Preferably, dielectric layer 72 is a composite of a lower undoped oxide, an intermediate spin-on-glass (SOG), and an upper undoped oxide. The lower undoped oxide is first deposited to a thickness of about 5500Δ, then the SOG is deposited to a thickness of about 6000Δ and etched back to provide a planarized surface, and then the upper undoped oxide is deposited to a thickness of about 5000Δ. Next, via openings are etched through the dielectric layer 72 and a second metalization step is performed. Then, the metal is patterned to define capacitor plates 76 and 78, a ground line 80, and vias 82 down to the interconnects 68. A further dielectric layer 74, preferably of hydrogen silsesquioxane (HSQ), is then deposited atop the dielectric layer 72 between the metal plates 76 and 78 and the ground line 80.

The second metalization layer is preferably of the same primarily aluminum composition as the first metalization that defines the interconnects 68. The ground line 80 is connected to a ground pad (not shown) at the periphery of the semiconductor chip. The portion of the chip that includes the metal ground line 80 is shown broken away since it is actually located beyond the periphery of the array of capacitive sensor cells. Two additional dielectric layers are deposited atop the HSQ layer 74 and the portions of the second metalization layer embedded therein. These two additional dielectric layers preferably comprise a phosphosilicate glass (PSG) layer 84 and a silicon nitride (Six Ny) layer 86.

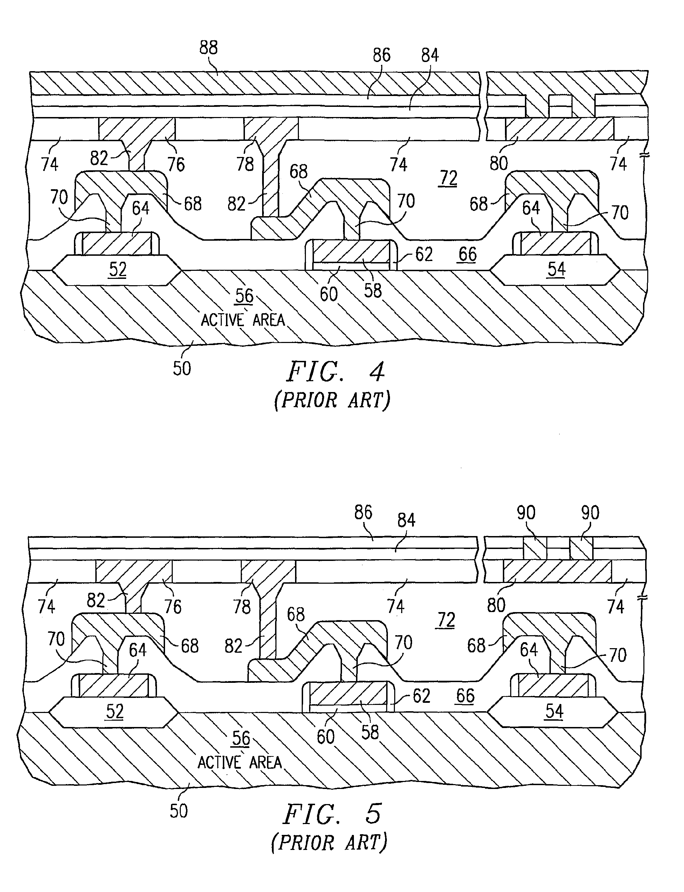

Now referring to FIG. 4, the fabrication process continues with the formation of a third metalization layer. Plug openings are etched through the dielectric layers 84 and 86 down to the aluminum ground line 80. A very thin film (not shown) of titanium nitride (TiN) is conformally deposited on the silicon nitride layer 86, on the walls within the plug openings through layers 84 and 86, and on the surface of the aluminum ground line 80 exposed inside the plug openings. Next, a tungsten (W) layer 88 is conformally deposited on the very thin titanium nitride film above the silicon nitride layer 86 and within the plug openings above the ground line 80.

Now referring to FIG. 5, the structure is shown after etching back the tungsten layer 88 and underlying titanium nitride down to the surface of the silicon nitride layer 86. This leaves tungsten plugs 90 in place, which are electrically connected to the aluminum layer 80 through the very thin titanium nitride film.

As previously mentioned, the aluminum layer 80 is connected to a ground pad (not shown), which is located at the periphery of the device. The purpose of the tungsten plugs 90 is to provide an electrostatic discharge (ESD) path to ground from the top surface of the device when touched by an object, such as a human finger. The aluminum layer 80 is provided in a peripheral pattern, preferably along two or three sides of the array of sensor cells, with thousands of tungsten plugs 90 juxtaposed thereover.

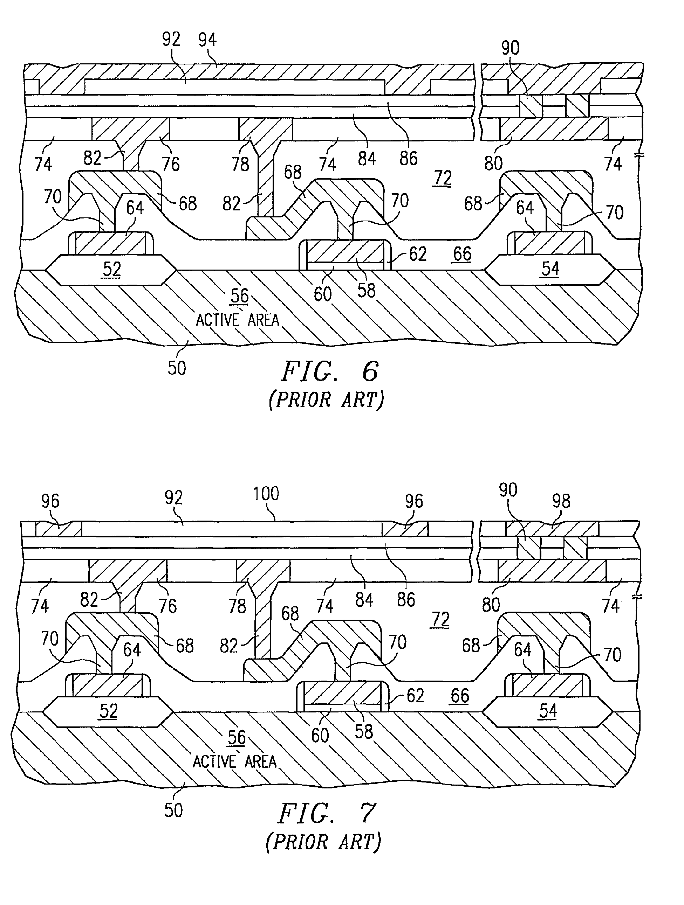

FIG. 6 shows the structure after several additional steps have been performed. An amorphous silicon carbide layer 92 is deposited on the silicon nitride layer 86 and atop the tungsten plugs 90. Then, the silicon carbide is patterned, using conventional photolithographic techniques, to open spaces around each sensor cell and over the tungsten plugs 90. Another thin film (not shown) of titanium nitride is conformally deposited on the silicon carbide layer 92 and within the spaces opened therethrough. Next, an additional tungsten metalization step is performed to provide tungsten layer 94 as shown.

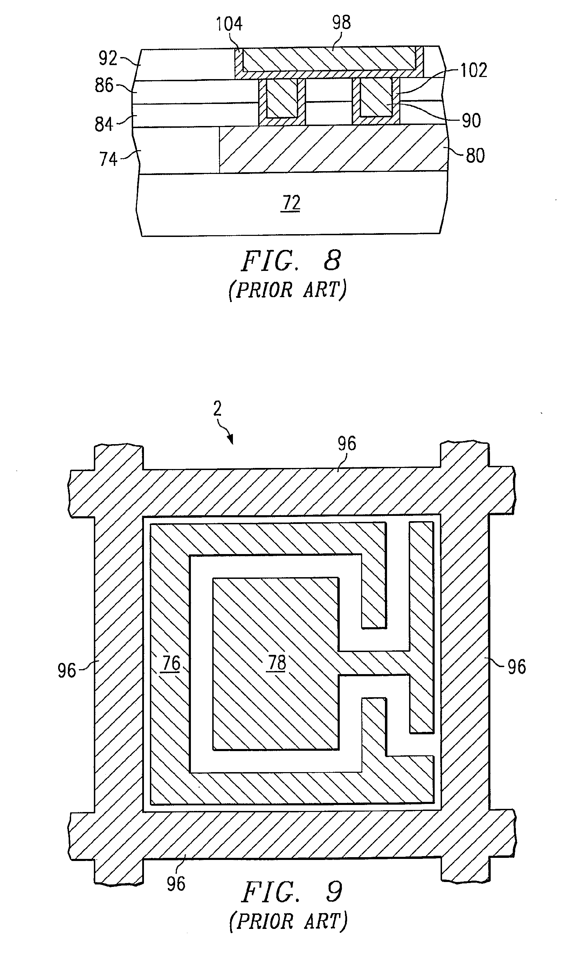

Next, with reference to FIG. 7, the tungsten layer 94 is etched back leaving tungsten grid lines 96 and a tungsten peripheral line 98 in place. Then, the titanium nitride film (not shown) is removed from the silicon carbide layer 92. The silicon carbide layer 92 has a top surface 100 that defines the sensing surface of the device that is contacted by the user's finger.

FIG. 8 is an enlarged view of a portion of FIG. 7 showing the tungsten line 98 and its connection to the aluminum ground line 80 through intermediate conductive structures. Shown greatly exaggerated in thickness are titanium nitride films 102 and 104, which were mentioned above but not shown in the previous figures.

FIG. 9 shows the preferred layout of one capacitive sensor cell 2, which includes separate capacitor plates 76 and 78. The first capacitor plate 76 is C-shaped and the second capacitor plate 78 has portions within and outside of the C-shaped first plate 76. Tungsten grid lines 96 are shown surrounding the sensor cell 2. This pattern is repeated throughout the array 3 of cells described above with reference to FIG. 1. For simplicity of illustration, the grid lines 96 are shown as single lines forming a square around the sensor cell 2 of FIG. 9. Preferably, however, the grid lines 96 are actually more complex in their layout, as will now be described.

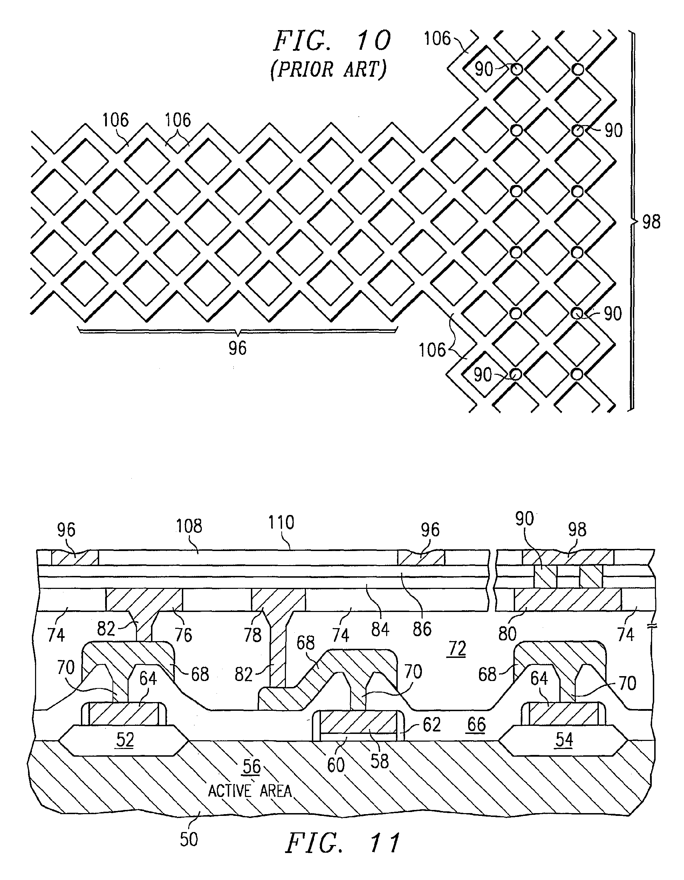

FIG. 10 shows an enlarged plan view of a portion of a grid line 96 and a portion of a peripheral line 98, each of which is laid out as a lattice or network of diagonally crossing microlines 106. Each microline 106 is approximately one micron in width. Within the lattice of the peripheral line 98 and therebelow are the previously mentioned tungsten plugs 90, which are depicted schematically as circles at spaced intersections of selected microlines 106. A plurality of parallel rows of tungsten plugs 90 are used, two being shown, but as many as five rows of staggered plugs being employed in practice.

The process steps described above are well known in the art of semiconductor fabrication. The resulting structures described above are also in the prior art and have been in use in commercial products for more than one year before the filing of this application. The invention described below provides an improvement in the fabrication of fingerprint detectors and in their reliability and performance.

It has been discovered that prior art fingerprint detectors are capable of being damaged by scratching with fingernails or other relatively hard objects. By replacing the top surface layer of silicon carbide with a layer of alumina, the scratch resistance of the sensing surface can be greatly improved. Also, alumina provides better ESD protection and an improved detection sensitivity.

In accordance with the present invention, the durability and sensitivity of the above-described fingerprint detector is improved by changing the composition of the top surface layer. FIG. 11 is similar to previously described FIG. 7, with the same numerals designating the same structural elements. However, instead of a top surface layer of amorphous silicon carbide, a layer of alumina 108 is deposited on the silicon nitride layer 86 and atop the tungsten plugs 90. Preferably, the alumina is deposited by plasma-enhanced, chemical vapor deposition (PECVD) using triethyldialuminum tri-sec-butoxide (TEDA-TSD) and oxygen as precursors, resulting in the deposition of an Al₂O₃ layer 108 atop the device. Then, the alumina layer 108 is patterned, using conventional photolithographic techniques, to open spaces around each sensor cell and over the tungsten plugs 90. Another film (not shown) of titanium nitride is conformally deposited on the alumina layer 108 and within the spaces opened therethrough. Next, an additional tungsten metalization step is performed, followed by an etch back to leave the tungsten grid lines 96 and tungsten peripheral line 98 in place. Then, the titanium nitride film (not shown) is removed from the alumina layer 108. The alumina layer 108 has a top surface 110 that defines the sensing surface of the device that is contacted by the user's finger.

Although the preferred embodiment has been described in detail, it should be understood that various changes, substitutions and alterations can be made therein without departing from the spirit and scope of the invention as defined by the appended claims.

## Claims

1. A fingerprint detector device comprising:
a semiconductor substrate;
an array of capacitive sensor cells formed on the semiconductor substrate;
a tungsten grid having grid lines surrounding each sensor cell and having a peripheral ground line;
an alumina layer disposed above the sensor cells, the tungsten grid being embedded in the alumina layer, the alumina layer and tungsten grid having exposed surface portions for contacting a fingerprint of a finger pressed against the detector device.

2. The fingerprint detector of Claim 1 wherein the alumina layer is part of a stacked arrangement of dielectric layers supported by the semiconductor substrate, and wherein the capacitive sensor cells include metal capacitor plates embedded in an intermediate dielectric layer of the stacked arrangement.

3. The fingerprint detector of Claim 2 wherein the metal capacitor plates of each capacitive sensor cell are two in number and are coplanar.

4. The fingerprint detector of Claim 3 wherein the one of the two metal capacitor plates of each sensor cell is generally C-shaped and the other of the two metal capacitor plates has portions within and outside of the C-shaped plate.

5. The fingerprint detector of Claim 3 or 4 wherein the metal capacitor plates each consists substantially of aluminum.

6. A method of making a fingerprint detector comprising:
providing a semiconductor substrate with transistor regions defined therein;
forming conductive layers above the substrate to interconnect the transistors;
forming a planarized insulating layer above the conductive layers;
defining coplanar capacitor plates on the planarized insulating layer with vias through the planarized insulating layer to portions of the conductive layers therebelow;
depositing a layer of alumina above and insulated from the capacitor plates;
defining openings within the alumina layer;
depositing a titanium nitride film on the alumina layer and within the openings therein;
depositing a tungsten layer on the titanium nitride layer;
selectively etching back the tungsten layer to remove the tungsten except within the openings; and
removing the titanium nitride above the surface of the alumina layer.

7. The method of Claim 6 wherein tungsten plugs are formed beneath the tungsten layer within the openings to provide connection to a metal ground line therebelow.

8. The method of Claim 7 wherein the capacitor plates are formed by depositing a metal layer and selectively removing portions of the metal layer to define the capacitor plates and the metal ground line during the same sequence of steps.
